# EUROPEAN PATENT APPLICATION

(11) **EP 4 114 111 A1**
(43) Date of publication of application: **04.01.2023**
(21) Application number: 22172727.4
(22) Date of filing: 11.05.2022
(51) Int. Cl.: H04W 72/04

(54) **ASSISTED INDICATION OF RESOURCE RESERVATION IN SIDE-LINK**

(30) Priority: 28.06.2021 US 202163215585 P
(71) Applicant: Apple Inc., Cupertino CA 95014 (US)
(72) Inventor: FAKOORIAN, Seyed Ali Akbar, Cupertino, CA 95014 (US); SUN, Haitong, Cupertino, CA 95014 (US); ZENG, Wei, Cupertino, CA 95014 (US); YE, Chunxuan, Cupertino, CA 95014 (US); WU, Zhibin, Cupertino, CA 95014 (US); ZHANG, Dawei, Cupertino, CA 95014 (US)
(74) Representative: Barton, Russell Glen

(57) **Abstract**

Techniques discussed herein can facilitate assisted indication of resource reservation in sidelink. One example aspect is a user equipment (UE), comprising: a memory interface; and processing circuitry communicatively coupled to the memory interface and configured to: generate a physical sidelink control channel (PSCCH) message related to a first stage sidelink control information (SCI), wherein the first stage SCI includes a first indication related to a SCI assistance request; and cause transmission of the first stage SCI.

## Description

### FIELD

The present disclosure relates to wireless technology including New Radio (NR) sidelink communications including a system and method for assisted resource reservation in NR sidelink communications.

### BACKGROUND

In general, sidelink communication refers to a communication mechanism/communication link between two devices (e.g., two user equipments (UEs)) without going through a base station (e.g., eNodeB, gNodeB etc.). One example of sidelink communication is vehicle-to-everything (V2X), referring to Vehicle-to-vehicle (V2V) and vehicle-to-Infrastructure (V2I) communications. V2X, V2V, and V2I are wireless technologies aimed at enabling data exchanges between a vehicle and its surroundings. New radio (NR) vehicle-to-everything V2X aims to support unicast, groupcast and broadcast communication over the sidelink. The V2X communications are sometimes referred to as 5G NR sidelink communications or sidelink communications.

### BRIEF DESCRIPTION OF THE DRAWINGS

FIG. 1 is a block diagram illustrating an exemplary wireless communication system that facilitates sidelink (SL) communications, in accordance with various aspects described herein.
FIG. 2 is a signal flow diagram outlining an example of assisted resource reservation in a sidelink (SL) communication link, in accordance with various aspects described herein.
FIG. 3 illustrates a resource bit-map identifying reserved resources configured by the Tx UE, in accordance with various aspects described.
FIG. 4 is a signal flow diagram outlining an example assistance resource reservation in a sidelink (SL) communication link according to receive (Rx) UEs indicated by a reserved bit-field of a second stage sidelink control information (SCI) format.
FIG. 5 is a table for an example second stage sidelink control information (SCI) format field value and associated second stage SCI formats or SCI assistance indication.
FIG. 6 is a signal flow diagram outlining an example assistance resource reservation in a sidelink (SL) communication link according to alternative or additional broadcast and feedback mechanisms of the receive (Rx) UEs.
FIG. 7 illustrates a flow diagram of a method for an assisted resource reservation in a sidelink (SL) communication link where a transmit (Tx) UE configures an assistance request.
FIG. 8 illustrates a flow diagram of a method for an assisted resource reservation in a sidelink (SL) communication link where a receive (Rx) UE broadcasts or transmits a sidelink control information (SCI) message according to an assistance request.
FIG. 9 illustrates an example of an infrastructure equipment, in accordance with various aspects disclosed.
FIG. 10 illustrates an example of a UE platform, in accordance with various aspects disclosed.

### DETAILED DESCRIPTION

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Sidelink (SL) transmissions serve important roles for public safety and vehicle-to-everything (V2X) services. Several physical channels and reference signals are defined for new radio (NR) SL. Some of the SL related physical channels include the physical sidelink shared channel (PSSCH) and the physical sidelink control channel (PSCCH). In some aspects, sidelink control information (SCI) is included in the PSCCH and/or PSSCH sent by the Tx UE to be decoded by a Rx UE for channel sensing purposes. In some aspects, the SCI indicates the reserved time-frequency resources for transmissions, demodulation reference signal (DMRS) pattern and antenna port, and so on.

In some aspects, the SCI payloads/contents are separated into two parts or stages, that is, a first stage SCI and a second stage SCI. The first stage SCI is carried by PSCCH and the second stage SCI is carried in PSSCH. In some aspects, the payload/contents of the first stage SCI include priority information, PSSCH frequency resource assignment, PSSCH time resource assignment, resource reservation period, DMRS pattern, a second stage SCI format, beta_offset indicators, the number of DMRS ports, modulation and coding scheme (MCS) table indices, and reserved bits. In some aspects, the payload/contents of the second stage SCI include feedback and CSI reporting data, identifiers of the Tx UE, identification of Rx UEs, as well as other resource information.

When the Tx UE is configured for mode 2 SL communication (direct SL configuration between UEs without intervention by a base station), one or more PSCCH carrying the first stage SCI and/or the PSSCH carrying the second stage SCI may not be received by one or more intended Rx UEs in the mode 2 SL communication group. Intended Rx UEs may not receive the PSCCH/PSSCH messaging from the Tx UE because the intended Rx UEs may be hidden or unable to receive signaling due to signal interference, channel congestion, poor quality of service, path loss, or the like. As such, one or more intended Rx UEs may not receive information from the Tx UE that enables establishment or maintenance of sidelink communications. As a result, reliability of the SL communication link is hindered and latencies are increased.

Various aspects of the present disclosure are directed towards an assisted indication of resource reservation in sidelink communication links. Mechanisms in which one or more Rx UEs assist the Tx UE in dissemination of at least one of the first stage SCI and second stage SCI to one or more other intended Rx UEs are presented.

In some aspects, the Tx UE can request and receive assistance from the Rx UEs in broadcasting a SCI message including at least one of the first stage SCI and second stage SCI. In this manner intended Rx UEs that did not receive the SCI signaling from the Tx UE can receive the SCI message from the Rx UEs. For example, the Tx UE can transmit a PSCCH including a first stage SCI that includes a first indication related to a SCI assistance request. An Rx UE may respond to the SCI assistance request by broadcasting the first stage SCI so that intended RX UEs that did not receive the first stage SCI from the Tx UE may receive the first stage SCI from the Rx UE.

The first indication can be configured by reusing existing bits in the first stage SCI. In one aspect, the first stage SCI includes a bit-field associated with a format of the second stage SCI, and the first indication is configured by setting the bit-field to a reserved value. In another aspect, the first indication is configured by mapping a MCS in the first stage SCI to a reserved row of a MCS table, or mapping the MCS in the first stage SCI to reserved bits in a higher layer SL table, or mapping the MCS in the first stage SCI to unused code points of the first stage SCI. In another aspect, the first stage SCI is configured according to a SCI format 1-A, and the first indication is configured by setting one or more reserved bits of the SCI format 1-A to a non-zero value. When the Rx UE receives and determines the reserved value in the first stage SCI, the Rx UE can configure resources to broadcast or transmit the SCI message.

In some aspects, Rx UE's that received the PSCCH are to broadcast the SCI message. In other aspects, a subset of Rx UEs that receive the PSCCH are to broadcast the SCI message. For example, pre-configured resources may indicate specific channel conditions that trigger the Rx UE to broadcast the SCI signaling. In another aspect, the indicated format of the second stage SCI (e.g. format 2-A, format 2-B, or a new SCI format) can correspond to a communication range threshold condition that should be satisfied for the Rx UE to broadcast the SCI message. In another aspect the Tx UE can transmit a second stage SCI with a second indication that indicates one or more Rx UEs to broadcast the SCI signaling.

In some aspects, the first stage SCI can further indicate one or more reserved resources for the Rx UEs to use when broadcasting the SCI signaling. The Rx UEs may broadcast the SCI message on the one or more reserved resources, or a remaining subset of the one or more reserved resources.

In another aspect, the Rx UEs may perform channel interference measurements after receiving the SCI signaling indicating the one or more reserved resources. When an Rx UE determines, based on the channel interference measurements, that the one or more reserved resources are experiencing poor channel conditions, the Rx UE may identify an updated one or more scheduling parameters that are different from scheduling parameters indicated by the SCI signaling. The Rx UEs can transmit a message including the updated one or more scheduling parameters to the Tx UE.

According to the aspects above, one or more Rx UEs assist the Tx UE in broadcasting the SCI message to intended Rx UEs that may not have received the SCI message from the Tx UE. As such, the reliability of the SL communication link is enhanced and SL communication latency is reduced. Additional aspects and details of the disclosure are further described below with reference to figures.

### Assisted Indication of Resource Reservation in Sidelink

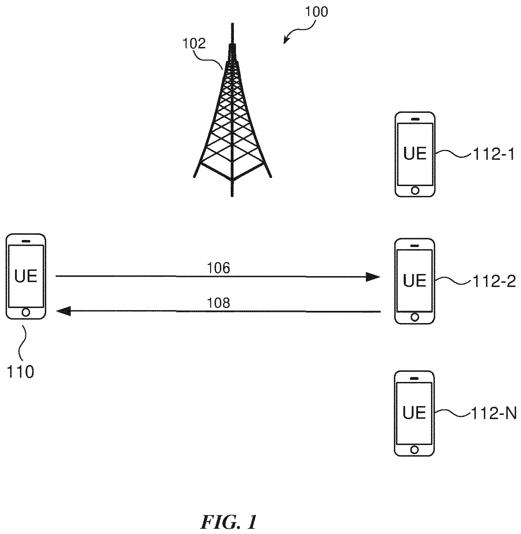

FIG. 1 is a block diagram illustrating an exemplary wireless communication system 100 that facilitates sidelink (SL) communications in accordance with various aspects described herein.

In some aspects, the wireless communication system 100 supports SL channel state information (CSI) reporting during SL groupcast communications. The wireless communication system 100 comprises base station 102 and a plurality of user equipments (UEs), UE 110, UE 112-1, UE 112-2 and UE 112-N. For the purposes of this description the UE 110 may be referred to as a transmit (Tx) UE and UEs 112 are referred to as receive (Rx) UEs. In other aspects, the wireless communication system 100 can comprise more or less UEs than illustrated above. In some aspects, the base station (BS) 102 is an eNodeB in LTE systems, a gNodeB in 5G new radio (NR) systems or a network device or node associated with any other generation of cellular technologies. In some aspects, the UE 110, and UEs 112 may comprise a mobile phone, tablet computer, an internet of things (IoT) device, a vehicle-to-everything (V2X) UE, etc. In some aspects, the UE 110 and UEs 112 are configured to communicate with the base station 102 over a communication medium (e.g., air). In some aspects, the UE 110 and UEs 112 are also configured to communicate with one another over SL (i.e., without going through the BS 102). In some aspects, the UE 110 and UEs 112 are configured to perform unicast, groupcast or broadcast communications with other UEs in the wireless communication system 100 using SL communication.

In SL communications, different resource allocation modes for UE transmissions are defined. In mode 1 a BS allocates resources (e.g., time-frequency resources) to be utilized for UE SL transmission. In mode 2 a UE (e.g., Tx UE 110) performs autonomous resource selection (e.g., independent of a BS) for SL transmissions.

In order to facilitate SL groupcast communications, the UE 110 and UEs 112 are configured to form a SL group. In some aspects, each UE within a SL group has an identifier associated therewith, for example, a group member ID. In some aspects, the UEs are configured to form the SL group based on higher layer signaling (e.g., from the BS 102). There may be multiple SL groups with the wireless communication system 100. In groupcast sidelink communication, each UE within a SL group is aware the other UEs within the SL group and each UE within the SL group is configured to perform groupcast communications (i.e., a common transmission) to the UEs within the SL group. In the example of FIG. 1, the UE 110 is configured to perform groupcast communications (e.g., simultaneous transmission) to the UEs 112. A UE within an SL group that is performing SL groupcast transmission is referred to herein as the Tx UE and the UEs within the SL group that receive the SL groupcast transmissions from the Tx UE are referred to herein as the Rx UEs. Thus, each of the UEs within the SL group can act as a Tx UEs or an Rx UE at different instances.

For the ease of reference, the UE 110 is hereinafter referred to as the Tx UE 110, and the UEs 112, that is UE 112-1, UE 112-2, and UE 112-N are hereinafter referred to as the Rx UEs 112, that is Rx UE 112-1, RX UE 112-2, and Rx UE 112-N, respectively

In some aspects, the Tx UE 110 will communicate with UEs 112 according to SL messaging 106. SL messaging 106 may be a SL groupcast message, SL control information (SCI) messaging or the like. In some aspects, the Rx UEs 112 will communicate with Tx UE 110 according to SL messaging 108. SL messaging 108 may be an acknowledgement (ACK), negative acknowledgment (NACK), SL channel state information (CSI) reporting, or the like.

In some aspects, the SL messaging 106 is sent via physical sidelink control channel (PSCCH) including a stage 1 SCI. In other aspects the SL messaging 106 is sent via physical sidelink shared channel (PSSCH) including a stage 2 SCI. The first stage SCI can include payload data, control information associated with the PSSCH and the second stage SCI such as the second stage SCI format, identification of Rx UEs, cast type, indication of reserved resources, SCI assistance request, indication of frequency resources (e.g., sub-channels), modulation and coding scheme (MCS) information, as well as other resource information. The first stage SCI can be transmitted according to a SCI format 1-A, a new SCI format, or other suitable format. The second stage SCI can include payload data, feedback and CSI reporting data, identifiers of the Tx UE 110, identification of Rx UEs, as well as other resource information. The second stage SCI can be transmitted according to a SCI format 2-A, an SCI format 2-B or new format, for example, an SCI format 2-C.

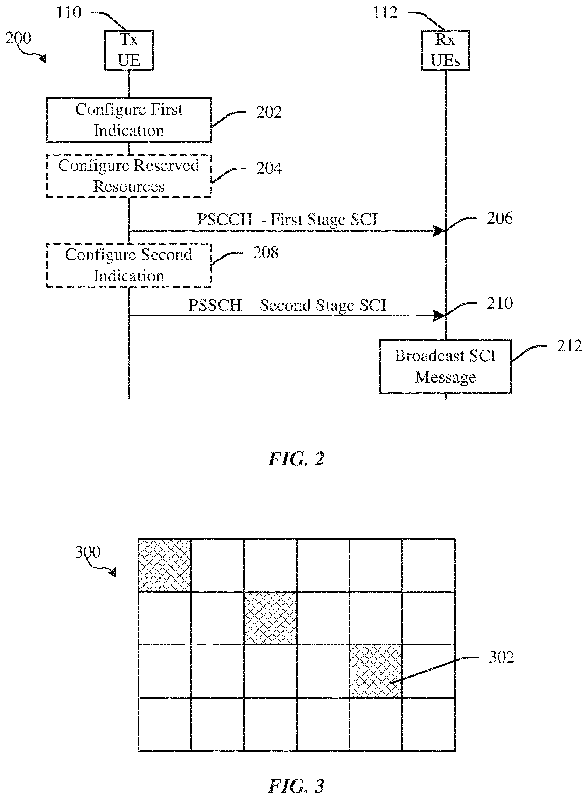

FIG. 2 is a signal flow diagram 200 outlining an example of assisted resource reservation in a sidelink (SL) communication link. The signaling of FIG. 2 occurs, for example, between a Tx UE 110 and an Rx UE 112 configured for mode 2 SL communications as described in FIG. 1. For the purposes of this description, the behavior of a single Rx UE 112 may be described with the understanding that the outlined behaviors may also be performed by other Rx UEs. At 202, the Tx UE 110 configures a first indication that includes information related to a SCI assistance request for another UE to broadcast or transmit a SCI message including one or more of the first stage SCI or the second stage SCI. The first indication is configured in a first stage SCI carried by PSCCH. The PSCCH may carry control information including time/frequency resource indications for a stage 2 SCI, MCS, information described in FIG. 1, first stage SCI information according to 3GPP Rel-16, or the like.

The first indication can be configured according to reserved bits, for example, by reusing existing bits in the first stage SCI as reserved bits. The first stage SCI can be configured according to a SCI format 1-A, or a new SCI format. In one aspect, the Tx UE 110 configures the first indication by setting at least one reserved bit of the first stage SCI to a non-zero value. In another aspect, the TX UE 110 configures the first indication by mapping a MCS in the first stage SCI to a reserved row of a MCS table. For example, the MCS in the first stage SCI can be mapped to a reserved row of a MCS index table described in Table 5.1.3-1 of 3^{rd} generation partnership project (3GPP) technical specification (TS) 38.214, like rows 29, 30, or 31. In another aspect, the Tx UE 110 configures the first indication by mapping the MCS to one or more reserved bits of a higher layer SL table or to one or more unused code points in the first stage SCI.

At 204, the Tx UE 110 can configure one or more reserved resources that are indicated by the first stage SCI. The reserved resources may correspond to one or more of the time/frequency resources, slot/symbol, or channels for the Rx UE 112 to use in broadcasting the SCI message corresponding to the first indication. The reserved resources are discussed further in FIG. 3. It is noted that an Rx UE 112 may broadcast the SCI message on resources selected by the Rx UE without the Tx UE 110 configuring reserved resources for broadcasting the SCI message.

At 206, the Tx UE 110 transmits the PSCCH message carrying the first stage SCI including the first indication and, optionally, the reserved resources. In some situations, (e.g., poor channel conditions) not all Rx UE 112 may receive the PSCCH messaging from the Tx UE 110. The Rx UE 112 that receives the PSCCH decode the PSCCH message and identify the first stage SCI including the first indication related to the SCI assistance request. The Rx UE 112 can further identify the reserved resources if the reserved resources are indicated in the first stage SCI. The Rx UE can identify the first indication based on reserved bits of the first stage SCI being set to a non-zero value, according to the mapping of the MCS to reserved row or unused code points, or according to another reserved bit.

At 208, the Tx UE 110 can configure a second indication in a second stage SCI carried by a PSSCH message. The second indication can indicate criteria specifying which Rx UE 112 should act as assisting UEs by broadcasting the SCI message. The Tx UE 110 can designate all of the Rx UE 112 as assisting UEs, a subset of Rx UE 112 as assisting UEs, or certain Rx UE 112 as assisting UEs according to cell IDs, or assisting UEs can be designated according to channel conditions or communication range between the Tx UE 110 and the Rx UE 112. In some aspects, the Tx UE 110 indicates the assisting UEs through the second indication. In other aspects, the Tx UE 110 does not indicate assisting UEs and rather assisting UEs are pre-configured. In this example assisting UEs may be pre-configured as all Rx UE 112, a subset of Rx UE 112, or according to channel conditions.

At 210, the Tx UE 110 transmits the PSSCH message carrying the second stage SCI which can include the second stage indication if the second stage indication is configured. In some situations, (e.g., poor channel conditions) not all Rx UE 112 may receive the PSSCH messaging from the Tx UE 110. The Rx UE 112 that receive the PSSCH message decode the PSSCH message and identify the second stage SCI and the second stage indication if the second stage indication is configured.

At 212, after receiving at least the PSCCH message, the Rx UE 112 broadcast or transmit the SCI message as indicated by the first indication. In addition, the Rx UE 112 can broadcast or transmit the second stage SCI. For example, the Rx UE 112-1 and Rx UE 112-2 broadcast or transmit the SCI message and Rx UE 112-N, which did not receive the PSCCH/PSSCH messaging from the Tx UE 110, can receive the SCI message from one or more of the Rx UE 112-1 or Rx UE 112-2. In some aspects, Rx UE 112 broadcast or transmit the SCI message according to the reserved resources configured by the Tx UE 110 and identified in the PSCCH message at 206. According to timing and latency constraints, the Rx UE 112 may broadcast or transmit the SCI message according to a remaining subset of the one or more reserved resources. In other aspects, the Rx UE 112 broadcast or transmit the SCI message according to pre-configured resources or another resource scheme.

In some aspects the Rx UE 112 broadcast or transmit the SCI message at 212 after receiving the PSCCH at 206 and before receiving the PSSCH message at 210 (not depicted). In this aspect, the Rx UE 112 can broadcast or transmit the first stage SCI before the Tx UE 110 transmits the PSSCH message. Optionally, the Rx UE 112 may then broadcast or transmit the second stage SCI after receiving the PSSCH message, if the first indication indicates SCI assistance associated with both the first stage SCI and the second stage SCI.

The broadcasting of the first stage SCI by Rx UE 112 means that Rx UE that did not receive the SCI message from the Tx UE 110 may receive the SCI message from one or more Rx UE 112. As such, the reliability of the SL communication link is enhanced and SL communication latency is reduced.

FIG. 3 illustrates a resource bit-map 300 identifying reserved resources 302 configured by the Tx UE 110. The Tx UE 110 can configure reserved resources 302, for example, at 204 of FIG. 2 according to the resource bit-map 300. Reserved resources 302 can be configured according to time/frequency resources, slot/symbol, or channels. The reserved resources 302 can indicate resources the Rx UE 112 should use when transmitting the SCI message, for example, at 212 of FIG. 2. The Tx UE 110 can configure the reserved resources 302 according to a pre-configured mapping, according to channel measurements measured by the Tx UE 110, according to channel measurements measured by the Rx UE 112, or the like. The Tx UE 110 can configure the reserved resources 302 according to resource allocations with the best known signal quality metrics. As such, when the assisting Rx UE 112 broadcast or transmit the SCI message according to the reserved resources 302, resources with the least amount of interference are used such that any hidden Rx UE or Rx UE 112 that did not receive the SCI message from the Tx UE 110 can receive the SCI message from the assisting Rx UE 112.

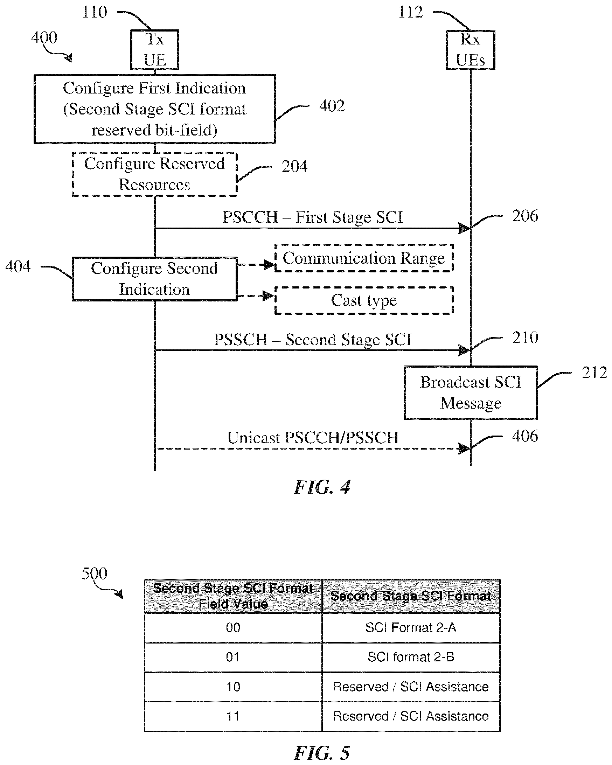

FIG. 4 is a signal flow diagram 400 outlining an example of assistance resource reservation in a sidelink (SL) communication. In this example, Rx UE 112 indicated by a reserved bit-field of a second stage SCI format are to broadcast an SCI message. The signal flow diagram 400 describes additional or alternative operations of configuring the first indication at 202, configuring the second indication of 208 of FIG. 2, and unicast PSCCH/PSSCH messaging.

The Tx UE 110 configures a first indication at 402 that includes information related to the SCI assistance request. The first indication is configured in the first stage SCI carried by PSSCH. The first stage SCI can include a bit-field associated with a format field value of the second stage SCI, and the first indication can be configured by setting the bit-field to a reserved value. Aspects of the second stage SCI format field value are further discussed in FIG. 5.

The Tx UE 110 can configure a second indication in a second stage SCI carried by a PSSCH message at 404. The second indication can indicate which of the Rx UE 112 are to broadcast the SCI message assist in broadcasting the SCI message. For example, the second indication can specify a criteria that an Rx UE can evaluate to determine whether or not to broadcast the SCI message. Since the bit-field associated with a format field value of the second stage SCI was used for the first indication, rather indicating a specific second stage SCI format (e.g. SCI format 2-A, SCI format 2-B, or a new SCI format), the Rx UE 112 can be autonomously configured to a SCI format when the Rx UE 112 identify the reserved value in the bit-field.

In an aspect, the Rx UE 112 can be configured or pre-configured to a SCI format 2-B. As such, the Rx UE receive and decode the second stage SCI according to a SCI format 2-B, and the second indication identified in the second stage SCI can indicate a communication range threshold. As such, Rx UE 112 that satisfy the communication range threshold are assisting UEs that can broadcast or transmit the SCI message at 212. In some examples, the second indication further indicates that assisting UEs of the Rx UE 112 are not required to signal a hybrid automatic repeat request (HARQ) or acknowledgement (ACK) feedback messages. The communication range threshold can be based on a channel quality between the Rx UE 112 and the Tx UE 110. The channel quality can correspond to path loss, reference signal received power (RSRP), signal to noise ratio (SNR), signal to interference plus noise ratio (SINR), bit error rate (BER), or the like. Rx UE 112 may perform communication range measurements to determine their status with respect to the communication range.

In one example, the second indication indicates that an Rx UE 112 has a communication range less than or equal to the communication range threshold, the Rx UE 112 is to act as an assisting UE and should broadcast or transmit the SCI message at 212. In this example, Rx UE 112 that are "closer" to the Tx UE 110 (e.g., within the communication range) serve as assisting UEs while Rx UE 112 that are "farther" from the Tx UE 110 (e.g., beyond the communication range) do not serve as assisting UEs.

In another example, the second indication indicates that an Rx UE 112 has a communication range greater than the communication range threshold, the Rx UE 112 is to act as an assisting UE and should broadcast or transmit the SCI message at 212. In this example, Rx UE 112 that are "farther" from the Tx UE 110 (e.g., beyond the communication range) serve as assisting UEs while Rx UE 112 that are "closer" to the Tx UE 110 (e.g., within the communication range) do not serve as assisting UEs. It is recognized that the Tx UE 110 can configure the second indication according to the communication range threshold at 208 of FIG. 2.

In another aspect, the Rx UE 112 can be configured or pre-configured to a SCI format 2-A. The Tx UE 110 can configure the second indication at 404 by configuring a cast type indicator to indicate unicast messaging. As such, the Rx UE 112 receive and decode the second stage SCI according to the SCI format 2-A, and the second indication can indicate which Rx UE 112 are assisting UEs. The second indication can identify a subset of Rx UE 112, all Rx UE 112, or specific UEs according to cell ID as the assisting UEs. Furthermore, other cast types (e.g. groupcast, broadcast) can be used to configure the second indication and can further indicate which Rx UE 112 are assisting UEs. It is recognized that the Tx UE 110 can configure the second indication according to the described unicast messaging at 208 of FIG. 2.

In some aspects, the Tx UE 110 can transmit a unicast PSCCH/PSSCH messaging at 406 to one of the Rx UE 112 after the assisting UEs broadcast or transmit the SCI message. In one aspect, the Tx UE 110 can configure reserved resources in the first stage SCI as described at 204. Because the assisting UEs will broadcast or transmit the SCI message according to the reserved resources communicated by the first stage SCI, the Tx UE 110 is aware of when the reserved resources are scheduled. As such, the Tx UE 110 can transmit the unicast PSSCH/PSSCH messaging after the reserved resources are utilized, and one or more desired channels for transmit are clear. It is appreciated that the Tx UE 110 can transmit the unicast PSCCH/PSSCH after the Rx UE 112 broadcast or transmit the SCI message at 212 of FIG. 2

FIG. 5 is a table 500 for an example second stage SCI format field value and associated second stage SCI formats or SCI assistance indication. The table 500 shows that the second stage SCI format field value (hereafter field value) of 00 corresponds to a SCI format 2-A for the second stage SCI and a field value of 01 corresponds to a SCI format 2-B. Field values 10 and 11 can correspond to a reserved SCI format (e.g. a new SCI format), a reserved value, or the first indication corresponding to SCI assistance. Thus the first indication can be configured by the Tx UE 110 configuring the field value to 10 or 11.

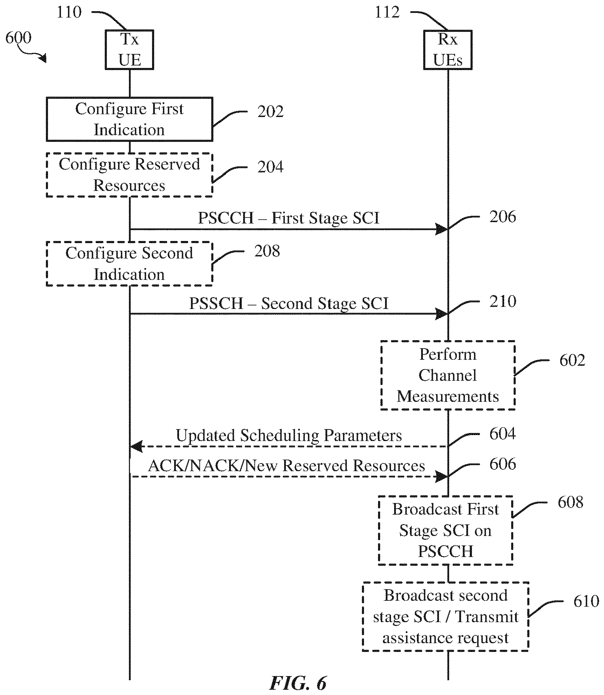

FIG. 6 is a signal flow diagram 600 outlining an example assistance resource reservation in a sidelink (SL) communication that includes alternative or additional broadcast and feedback mechanisms from the Rx UE 112. The signal flow diagram 600 describes additional or alternative operations of broadcasting the SCI message at 212 of FIG. 2 and FIG. 212 and updating scheduling parameters for the configured reserved resources.

After the Rx UE 112 receives the first stage SCI and identifies the reserved resources at 206, the Rx UE 112 can determine one or more updated scheduling parameters. In some aspects, the Rx UE 112 determines the one or more updated scheduling parameters according to unicast SL communications with the Tx UE 110. Other cast types, for example, groupcast and broadcast are possible corresponding to more than one Rx UE 112 that determine the one or more updated scheduling parameters. In one aspect, the Rx UE 112 can perform channel measurements that include channel interference measurements corresponding to the reserved resources at 602. The channel measurements can be performed before or after receiving the first stage SCI at 206. The Rx UE 112 can determine, based on the channel measurements, that one or more reserved resources are experiencing poor channel conditions, for example, according to a channel quality threshold. The Rx UE 112 may identify an updated one or more scheduling parameters that are different from scheduling parameters indicated by the first stage SCI. The Rx UE 112 can transmit a message indicated the updated scheduling parameters at 604 to the Tx UE 110.

In response to receiving the updated scheduling parameters, the Tx UE 110 can transmit an ACK, a NACK, or an indication of new reserved resources at 606 to the Rx UE 112. For example, the Tx UE 110 could transmit the ACK indicating that the reserved resources are updated according to the updated scheduling parameters identified by the Rx UE 112. Alternatively, the Tx UE 110 could transmit the NACK indicating that the updated scheduling parameters are ignored and the originally indicated reserved resource transmitted at 206 are to be used by the Rx UE 112. Alternatively, the Tx UE 110 can determine new reserved resources according to one or more of the updated scheduling parameters, scheduling parameters received from a plurality of Rx UE 112, or additional measurements performed by the Tx UE 110. It is appreciated that acts described at 602, 604, and 606 can occur before broadcasting the SCI message at 212 of FIG. 2 or FIG. 4.

In some aspects, the Rx UE 112 can identify a PSSCH based format 1-A configuration comprised in the first stage SCI, and broadcast the first stage SCI according to the PSCCH based format 1-A configuration at 608. Furthermore, the PSCCH can be based on the SCI format 1-A described in 3GPP release 16 (Rel-16), or in an alternative 3GPP release.

In other aspects, the first indication, identified by the Rx UE 112, indicates a SCI assistance request associated with both the first stage SCI and the second stage SCI. As such, the Rx UE 112 can transmit both the first stage SCI and the second stage SCI at 610. In one aspect, the Rx UE 112 can also transmit an additional assistance request corresponding to the first indication identified at 206. In another aspect, the Rx UE 112 transmitting both the first stage SCI and the second stage SCI at 610 indicates the additional assistance request corresponding to the first indication identified at 206. The additional assistance request indicates that one or more Rx UE 112 are to broadcast the SCI message according to the first indication. As such, there is another opportunity for any hidden Rx UE or Rx UE 112 that did not receive the SCI message from the Tx UE 110 to receive the SCI message from the assisting Rx UE 112. It is appreciated that acts described at 609 can occur as part of broadcasting the SCI message at 212 of FIG. 2 or FIG. 4.

In some aspects, acts described at 602 through 610 that involve Rx UE 112 broadcasting or transmitting SCI messages can be broadcast or transmitted according to the reserved resources or one or more remaining reserved resources or updated/new reserved resources as described herein.

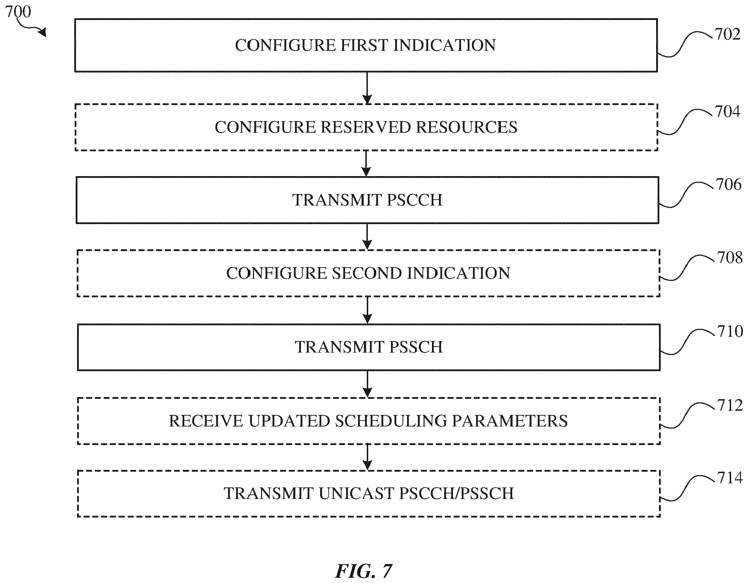

FIG. 7 illustrates a flow diagram of an example method 700 for an assisted resource reservation in a SL communication link where a Tx UE configures an assistance request. The method 700 may be performed, for example by Tx UE 110 of FIG. 2, FIG. 4, or FIG. 6.

At 702, the method includes configuring a first indication that includes information related to a SCI assistance request for another UE to broadcast or transmit a SCI message. The first indication is configured according to a first stage SCI. FIG. 2 at 202, FIG. 4 at 402, and FIG. 6 at 202 correspond to some aspects of act 702.

At 704, the method includes optionally configuring reserved resources for another UE to broadcast or transmit the SCI message. FIG. 2 at 204, FIG. 4 at 204, and FIG. 6 at 204 correspond to some aspects of act 704.

At 706, the method includes transmitting a PSCCH message carrying the first stage SCI and optionally the reserved resources. FIG. 2 at 206, FIG. 4 at 206, and FIG. 6 at 206 correspond to some aspects of act 706.

At 708, the method includes optionally configuring a second indication that indicates one or more other UEs that are to broadcast the SCI signaling. FIG. 2 at 208, FIG. 4 at 404, and FIG. 6 at 209 correspond to some aspects of act 708.

At 710, the method includes transmitting a PSSCH message carrying a second stage SCI which can optionally include the second stage indication. FIG. 2 at 210, FIG. 4 at 210, and FIG. 6 at 210 correspond to some aspects of act 710.

At 712, the method includes optionally receiving updated scheduling parameters corresponding to the reserved resources of 704. The method can optionally include transmitting an ACK, NACK, or updated reserved resources in response to receiving the updated scheduling parameters. FIG. 6 at 604 and FIG. 6 at 606 correspond to some aspects of act 712.

At 714, the method includes optionally transmitting a unicast, or other cast type, PSCCH / PSSCH message. FIG. 4 at 406 corresponds to some aspects of act 714.

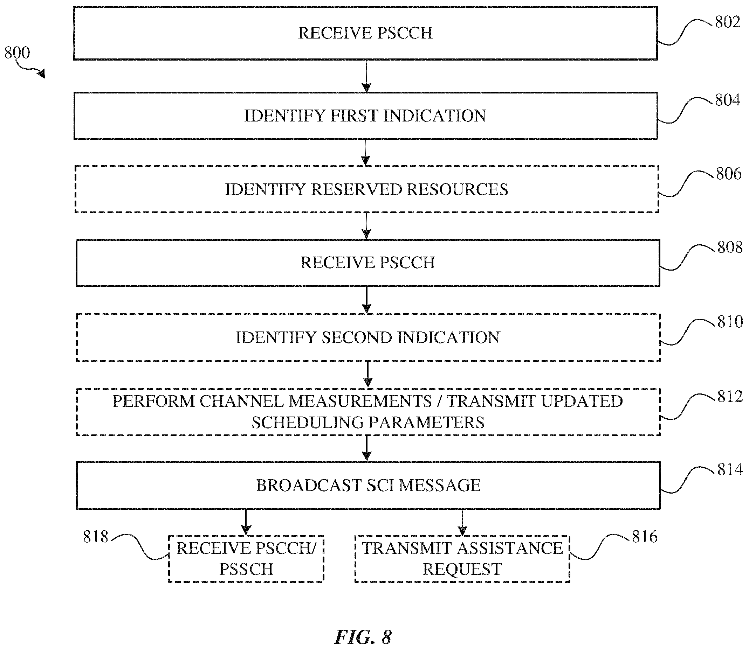

FIG. 8 illustrates a flow diagram of a method 800 for an assisted resource reservation in a SL communication link where a Rx UE broadcasts or transmits a SCI message according to an assistance request. The method 800 may be performed, for example by one or more Rx UE 112 of FIG. 1, FIG. 2, FIG. 4, or FIG. 6.

At 802, the method includes receiving a PSCCH message comprising a first stage SCI. FIG. 2 at 206, FIG. 4 at 406, and FIG. 6 at 206 correspond to some aspects of act 802.

At 804, the method includes identifying a first indication that includes a SCI assistance request to broadcast or transmit a SCI message. FIG. 2 at 206, FIG. 4 at 406, and FIG. 6 at 206 correspond to some aspects of act 804.

At 806, the method includes optionally identifying reserved resources in the first stage SCI to broadcast or transmit the SCI message according to the reserved resources. FIG. 2 at 206, FIG. 4 at 406, and FIG. 6 at 206 correspond to some aspects of act 806.

At 808, the method includes receiving a PSCCH message comprising a second stage SCI. FIG. 2 at 210, FIG. 4 at 210, and FIG. 6 at 210 correspond to some aspects of act 808.

At 810, the method includes optionally identifying a second indication, comprised in the second stage SCI, that indicates one or more other UEs that are to broadcast the SCI signaling. FIG. 2 at 210, FIG. 4 at 210, and FIG. 6 at 210 correspond to some aspects of act 810.

At 812, the method includes optionally performing channel measurements and updating scheduling parameters corresponding to the reserved resources of 806 according to the channel measurements, and transmitting the updated scheduling parameters. The method further includes optionally receiving an ACK, NACK, or updated reserved resources in response to transmitting the updated scheduling parameters. FIG. 6 at 602, 604, and 606 correspond to some aspects of act 812.

At 814, the method includes broadcasting or transmitting a SCI message according to the first indication. FIG. 2 at 212, FIG. 4 at 212, and FIG. 6 at 608 and 610 corresponds to some aspects of act 814.

At 816, the method includes optionally transmitting an additional assistance request for one or more Rx UE to broadcast the SCI message according to the first indication. FIG. 6 at 610 correspond to some aspects of act 816.

At 818, the method includes optionally receiving a unicast, or other cast type, PSCCH / PSSCH message. FIG. 4 at 406 corresponds to some aspects of act 818.

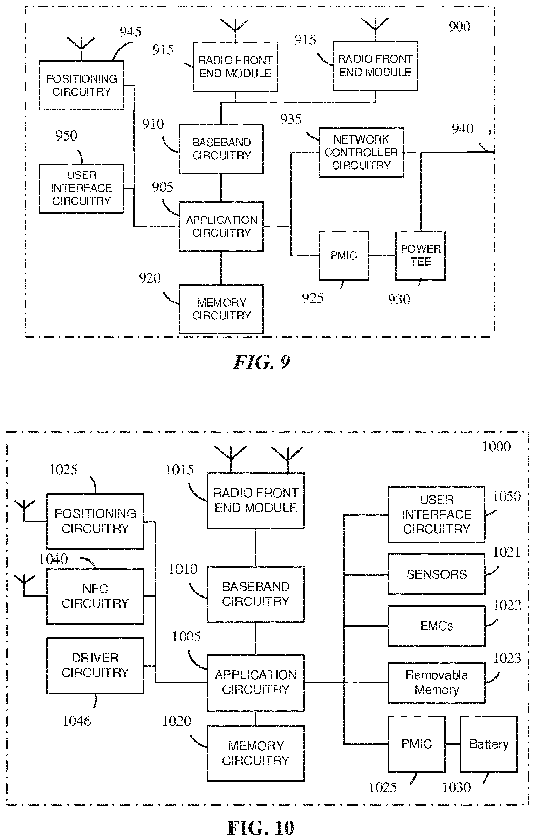

FIG. 9 illustrates an example of infrastructure equipment 900 in accordance with various aspects. The infrastructure equipment 900 (or "system 900") may be implemented as a base station, radio head, RAN node such as the BS 102 of FIG. 1 and/or any other element/device discussed herein. In other examples, the system 900 could be implemented in or by a UE such as Tx UE 110 or Rx UE 112.

The system 900 includes application circuitry 905, baseband circuitry 910, one or more radio front end modules (RFEMs) 915, memory circuitry 920 (including a memory interface), power management integrated circuitry (PMIC) 925, power tee circuitry 930, network controller circuitry 935, network interface connector 940, satellite positioning circuitry 945, and user interface 950. In some aspects, the device 900 may include additional elements such as, for example, memory/storage, display, camera, sensor, or input/output (I/O) interface. In other aspects, the components described below may be included in more than one device. For example, said circuitries may be separately included in more than one device for CRAN, vBBU, or other like implementations.

Application circuitry 905 includes circuitry such as, but not limited to one or more processors (or processor cores), processing circuitry, cache memory, and one or more of low drop-out voltage regulators (LDOs), interrupt controllers, serial interfaces such as SPI, 12C or universal programmable serial interface module, real time clock (RTC), timer-counters including interval and watchdog timers, general purpose input/output (I/O or IO), memory card controllers such as Secure Digital (SD) MultiMediaCard (MMC) or similar, Universal Serial Bus (USB) interfaces, Mobile Industry Processor Interface (MIPI) interfaces and Joint Test Access Group (JTAG) test access ports. The processors (or cores) of the application circuitry 905 may be coupled with or may include memory/storage elements and may be configured to execute instructions stored in the memory/storage to enable various applications or operating systems to run on the system 900. In some implementations, the memory/storage elements may be on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor(s) of application circuitry 905 may include, for example, one or more processor cores (CPUs), one or more application processors, one or more graphics processing units (GPUs), one or more reduced instruction set computing (RISC) processors, one or more Acorn RISC Machine (ARM) processors, one or more complex instruction set computing (CISC) processors, one or more digital signal processors (DSP), one or more FPGAs, one or more PLDs, one or more ASICs, one or more microprocessors or controllers, or any suitable combination thereof. In some aspects, the application circuitry 905 may comprise, or may be, a special-purpose processor/controller to operate according to the various aspects herein. As examples, the processor(s) of application circuitry 905 may include one or more Apple^{®} processors, Intel^{®} processor(s); Advanced Micro Devices (AMD) Ryzen^{®} processor(s), Accelerated Processing Units (APUs), or Epyc^{®} processors; ARM-based processor(s) licensed from ARM Holdings, Ltd. such as the ARM Cortex-A family of processors and the ThunderX2^{®} provided by Cavium(TM), Inc.; a MIPS-based design from MIPS Technologies, Inc. such as MIPS Warrior P-class processors; and/or the like. In some aspects, the system 900 may not utilize application circuitry 905, and instead may include a special-purpose processor/controller to process IP data received from an EPC or 5GC, for example.

User interface circuitry 950 may include one or more user interfaces designed to enable user interaction with the system 900 or peripheral component interfaces designed to enable peripheral component interaction with the system 900. User interfaces may include, but are not limited to, one or more physical or virtual buttons (e.g., a reset button), one or more indicators (e.g., light emitting diodes (LEDs)), a physical keyboard or keypad, a mouse, a touchpad, a touchscreen, speakers or other audio emitting devices, microphones, a printer, a scanner, a headset, a display screen or display device, etc. Peripheral component interfaces may include, but are not limited to, a nonvolatile memory port, a universal serial bus (USB) port, an audio jack, a power supply interface, etc.

The components shown by FIG. 9 may communicate with one another using interface circuitry, that is communicatively coupled to one another, which may include any number of bus and/or interconnect (IX) technologies such as industry standard architecture (ISA), extended ISA (EISA), peripheral component interconnect (PCI), peripheral component interconnect extended (PCIx), PCI express (PCIe), or any number of other technologies. The bus/IX may be a proprietary bus, for example, used in a SoC based system. Other bus/IX systems may be included, such as an 12C interface, an SPI interface, point to point interfaces, and a power bus, among others.

FIG. 10 illustrates an example of a platform 1000 (or "device 1000") in accordance with various aspects. In aspects, the computer platform 1000 may be suitable for use as TX UE 110, Rx UE 112 of FIG. 1, and/or any other element/device discussed herein. The platform 1000 may include any combinations of the components shown in the example. The components of platform 1000 may be implemented as integrated circuits (ICs), portions thereof, discrete electronic devices, or other modules, logic, hardware, software, firmware, or a combination thereof adapted in the computer platform 1000, or as components otherwise incorporated within a chassis of a larger system. The block diagram of FIG. 10 is intended to show a high level view of components of the computer platform 1000. However, some of the components shown may be omitted, additional components may be present, and different arrangement of the components shown may occur in other implementations.

Application circuitry 1005 includes circuitry such as, but not limited to one or more processors (or processor cores), cache memory, and one or more of LDOs, interrupt controllers, serial interfaces such as SPI, 12C or universal programmable serial interface module, RTC, timer-counters including interval and watchdog timers, general purpose I/O, memory card controllers such as SD MMC or similar, USB interfaces, MIPI interfaces, and JTAG test access ports. The processors (or cores) of the application circuitry 1005 may be coupled with or may include memory/storage elements and may be configured to execute instructions stored in the memory/storage to enable various applications or operating systems to run on the system 1000. In some implementations, the memory/storage elements may be on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

As examples, the processor(s) of application circuitry 1005 may include a general or special purpose processor, such as an A-series processor (e.g., the A13 Bionic), available from Apple^{®} Inc., Cupertino, CA or any other such processor. The processors of the application circuitry 1005 may also be one or more of Advanced Micro Devices (AMD) Ryzen^{®} processor(s) or Accelerated Processing Units (APUs); Core processor(s) from Intel^{®} Inc., Snapdragon^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; or the like. In some implementations, the application circuitry 1005 may be a part of a system on a chip (SoC) in which the application circuitry 1005 and other components are formed into a single integrated circuit, or a single package.

The baseband circuitry or processor 1010 may be implemented, for example, as a solder-down substrate including one or more integrated circuits, a single packaged integrated circuit soldered to a main circuit board or a multi-chip module containing two or more integrated circuits. Furthermore, the baseband circuitry or processor 1010 may cause transmission of various resources.

The platform 1000 may also include interface circuitry (not shown) that is used to connect external devices with the platform 1000. The interface circuitry may communicatively couple one interface to another. The external devices connected to the platform 1000 via the interface circuitry include sensor circuitry 1021 and electromechanical components (EMCs) 1022, as well as removable memory devices coupled to removable memory circuitry 1023.

A battery 1030 may power the platform 1000, although in some examples the platform 1000 may be mounted deployed in a fixed location, and may have a power supply coupled to an electrical grid. The battery 1030 may be a lithium ion battery, a metal-air battery, such as a zinc-air battery, an aluminum-air battery, a lithium-air battery, and the like. In some implementations, such as in V2X applications, the battery 1030 may be a typical lead-acid automotive battery.

While the methods are illustrated and described above as a series of acts or events, it will be appreciated that the illustrated ordering of such acts or events are not to be interpreted in a limiting sense. For example, some acts may occur in different orders and/or concurrently with other acts or events apart from those illustrated and/or described herein. In addition, not all illustrated acts may be required to implement one or more aspects or examples of the disclosure herein. Also, one or more of the acts depicted herein may be carried out in one or more separate acts and/or phases. In some examples, the methods illustrated above may be implemented in a computer readable medium using instructions stored in a memory. Many other examples and variations are possible within the scope of the claimed disclosure.

As it is employed in the subject specification, the term "processor" can refer to substantially any computing processing unit or device including, but not limited to including, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit, a digital signal processor, a field programmable gate array, a programmable logic controller, a complex programmable logic device, a discrete gate or transistor logic, discrete hardware components, or any combination thereof designed to perform the functions and/or processes described herein. Processors can exploit nano-scale architectures such as, but not limited to, molecular and quantum-dot based transistors, switches and gates, in order to optimize space usage or enhance performance of mobile devices. A processor can also be implemented as a combination of computing processing units.

Examples (aspects) can include subject matter such as a method, means for performing acts or blocks of the method, at least one machine-readable medium including instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to aspects and examples described herein.

Example 1 is a user equipment (UE), comprising: a memory interface; and processing circuitry communicatively coupled to the memory interface and configured to: generate a physical sidelink control channel (PSCCH) message related to a first stage sidelink control information (SCI), wherein the first stage SCI includes a first indication related to a SCI assistance request; and cause transmission of the first stage SCI.

Example 2 comprises the subject matter of example 1, wherein the processing circuitry is further configured to configure the first indication by mapping a modulation and coding scheme (MCS) in the first stage SCI to one of a reserved row of a MCS table, one or more reserved bits of a sidelink table, or one or more unused code points.

Example 3 comprises the subject matter of example 1, wherein the first stage SCI is configured according to a SCI format 1-A, and the first indication is configured by setting a one or more reserved bits of the SCI format 1-A to a non-zero value.

Example 4 comprises the subject matter of example 1, wherein the first stage SCI includes a bit-field associated with a format of a second stage SCI and the first indication is configured by setting the bit-field to a reserved value.

Example 5 comprises the subject matter of example 1, wherein the first stage SCI indicates one or more reserved resources that indicates to one or more assisting UEs to transmit the first stage SCI according to the one or more reserved resources.

Example 6 comprises the subject matter of example 1, wherein the first stage SCI indicates a format 2-B for a second stage SCI, the processing circuitry further configured to: generate a physical sidelink shared channel (PSSCH) message comprising the second stage SCI, wherein the second stage SCI includes a second indication that indicates one or more assisting UEs to transmit the first stage SCI.

Example 7 comprises the subject matter of example 1, further configured to: configure the second indication based on a communication range threshold, wherein the communication range threshold is based on a channel quality between a receiving (Rx) UE and the UE.

Example 8 comprises the subject matter of example 7, wherein the second indication indicates either: that the Rx UE is to transmit the first stage SCI when the Rx UE has a communication range less than or equal to the communication range threshold, or that the Rx UE is to transmit the first stage SCI when the Rx UE has a communication range greater than the communication range threshold.

Example 9 comprises the subject matter of example 1, wherein the first stage SCI further indicates a second stage SCI format according to a format 2-A, the processing circuitry further configured to: generate a physical sidelink shared channel (PSSCH) message comprising the second stage SCI, wherein the second stage SCI includes a second indication that indicates one or more assisting UEs to transmit the first stage SCI; and configure the second indication by configuring a cast type indicator to indicate unicast messaging.

Example 9 comprises the subject matter of example 1, wherein the first stage SCI further indicates a second stage SCI format according to a format 2-A, the processing circuitry further configured to: generate a physical sidelink shared channel (PSSCH) message comprising the second stage SCI, wherein the second stage SCI includes a second indication that indicates one or more assisting UEs to transmit the first stage SCI; and configure the second indication by configuring a cast type indicator to indicate unicast messaging.

Example 10 comprises the subject matter of example 1, wherein the first stage SCI further indicates one or more reserved resources and one or more scheduling parameters, and the processing circuitry is further configured to: receive an updated one or more scheduling parameters for the one or more reserved resources.

Example 11 is a user equipment (UE), comprising: a memory interface; and processing circuitry communicatively coupled to the memory interface and configured to: receive a physical sidelink control channel (PSCCH) message comprising a first stage sidelink control information (SCI); and identify, in the first stage SCI, a first indication related to a SCI assistance request, and in response to the PSCCH message, cause transmission of the first stage SCI to one or more other UEs.

Example 12 comprises the subject matter of example 11, wherein the first stage SCI indicates one or more reserved resources including one or more scheduling parameters, the processing circuitry further configured to: perform channel interference measurements; determine an updated one or more scheduling parameters that are different from the one or more scheduling parameters, according to the channel interference measurements; and generate a message comprising the updated one or more scheduling parameters.

Example 13 comprises the subject matter of example 11, further configured to receive a physical sidelink shared channel (PSSCH) message comprising a second stage SCI wherein the second stage SCI includes a second indication indicating one or more assisting UEs to transmit the first stage SCI.

Example 14 comprises the subject matter of example 11, identify a PSCCH based format 1-A configuration comprised in the first stage SCI; and cause transmission of the first stage SCI according to the PSCCH based format 1-A configuration.

Example 15 comprises the subject matter of example 11, further configured to: receive a second stage SCI; and cause transmission of the second stage SCI according to the first indication wherein transmission of the first stage SCI and second stage SCI indicates the SCI assistance request identified in the first indication.

Example 16 comprises the subject matter of example 11, further configured to: receive a physical sidelink shared channel (PSSCH) message comprising a second stage SCI; identify second indication, in the second stage SCI, comprising a communication range threshold, wherein the communication range threshold is related to a channel quality between the UE and a Tx UE; perform communication range measurements; based on the communication range measurements, determine that the UE satisfies the communication range threshold; and cause transmission of the first stage SCI to one or more other UEs in response to satisfying the communication range threshold.

Example 17 comprises the subject matter of example 11, further configured to: identify a SCI format 1-A comprised in the first stage SCI; and wherein the first indication is identified by a one or more reserved bits of the SCI format 1-A that are of a non-zero value.

Example 18 comprises the subject matter of example 11, further configured to: identify one or more reserved resources comprised in the first stage SCI; and transmit the first stage SCI according to the one or more reserved resources.

Example 19 is a baseband processor configured to: generate a first stage sidelink control information (SCI), wherein the first stage SCI includes a first indication related to a SCI assistance request, wherein the first indication instructs a UE to transmit the first stage SCI.

Example 20 comprises the subject matter of example 19, wherein the first indication is configured by a reserved value in the first stage SCI.

A user equipment configured to perform any action or combination of actions as substantially described herein, comprised in examples 1-20, and in the Detailed Description as included in the user equipment.

A network node configured to perform any action or combination of actions as substantially described herein, comprised in examples 1-20, and in the Detailed Description as included in the network node.

A non-volatile or non-transitory computer-readable medium that stores instructions that, when executed, cause the performance of any action or combination of actions as substantially described herein, comprised in examples 1-20, and in the Detailed Description.

A method as substantially described herein with reference to each or any combination substantially described herein, comprised in examples 1-20, and in the Detailed Description.

A wireless device configured to perform any action or combination of actions as substantially described herein, comprised in examples 1-20, and in the Detailed Description as included in the network node.

An integrated circuit configured to perform any action or combination of actions as substantially described herein, comprised in examples 1-20, and in the Detailed Description as included in the network node.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., EPROM, card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data. Additionally, a computer program product can include a computer readable medium having one or more instructions or codes operable to cause a computer to perform functions described herein.

Communication media embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

An exemplary storage medium can be coupled to processor, such that processor can read information from, and write information to, storage medium. In the alternative, storage medium can be integral to processor. Further, in some aspects, processor and storage medium can reside in an ASIC. Additionally, ASIC can reside in a user terminal or apparatus.

In this regard, while the disclosed subject matter has been described in connection with various aspects and corresponding Figures, where applicable, it is to be understood that other similar aspects can be used or modifications and additions can be made to the described aspects for performing the same, similar, alternative, or substitute function of the disclosed subject matter without deviating therefrom. Therefore, the disclosed subject matter should not be limited to any single aspect described herein, but rather should be construed in breadth and scope in accordance with the appended claims below.

In particular regard to the various functions performed by the above described components (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the disclosure. In addition, while a particular feature can have been disclosed with respect to only one of several implementations, such feature can be combined with one or more other features of the other implementations as can be desired and advantageous for any given or particular application.

The present disclosure is described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

As used herein, the term "circuitry" can refer to, be part of, or include an Application Specific Integrated Circuit (ASIC), an electronic circuit, a processor (shared, dedicated, or group), or associated memory (shared, dedicated, or group) operably coupled to the circuitry that execute one or more software or firmware programs, a combinational logic circuit, or other suitable hardware components that provide the described functionality. In some aspects, the circuitry can be implemented in, or functions associated with the circuitry can be implemented by, one or more software or firmware modules. In some aspects, circuitry can include logic, at least partially operable in hardware.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising." Additionally, in situations wherein one or more numbered items are discussed (e.g., a "first X", a "second X", etc.), in general the one or more numbered items can be distinct or they can be the same, although in some situations the context can indicate that they are distinct or that they are the same.

### Numbered Statements of invention

1. A user equipment (UE), comprising:
   a memory interface; and
   processing circuitry communicatively coupled to the memory interface and
   configured to:
      generate a physical sidelink control channel (PSCCH) message related to a first stage sidelink control information (SCI), wherein the first stage SCI includes a first indication related to a SCI assistance request; and
      cause transmission of the first stage SCI.
2. The UE of statement 1, wherein the processing circuitry is further configured to configure the first indication by mapping a modulation and coding scheme (MCS) in the first stage SCI to one of a reserved row of a MCS table, one or more reserved bits of a sidelink table, or one or more unused code points.
3. The UE of statement 1, wherein the first stage SCI is configured according to a SCI format 1-A, and the first indication is configured by setting a one or more reserved bits of the SCI format 1-A to a non-zero value.
4. The UE of statement 1, wherein the first stage SCI includes a bit-field associated with a format of a second stage SCI and the first indication is configured by setting the bit-field to a reserved value.
5. The UE of statement 1, wherein the first stage SCI indicates one or more reserved resources that indicates to one or more assisting UEs to transmit the first stage SCI according to the one or more reserved resources.
6. The UE of statement 1, wherein the first stage SCI indicates a format 2-B for a second stage SCI, the processing circuitry further configured to:
   generate a physical sidelink shared channel (PSSCH) message comprising the second stage SCI, wherein the second stage SCI includes a second indication that indicates one or more assisting UEs to transmit the first stage SCI.
7. The UE of statement 6, further configured to:
   configure the second indication based on a communication range threshold,
   wherein the communication range threshold is based on a channel quality between a receiving (Rx) UE and the UE.
8. The UE of statement 7, wherein the second indication indicates either:
   that the Rx UE is to transmit the first stage SCI when the Rx UE has a communication range less than or equal to the communication range threshold, or
   that the Rx UE is to transmit the first stage SCI when the Rx UE has a communication range greater than the communication range threshold.
9. The UE of statement 1, wherein the first stage SCI further indicates a second stage SCI format according to a format 2-A, the processing circuitry further configured to:
   generate a physical sidelink shared channel (PSSCH) message comprising the second stage SCI, wherein the second stage SCI includes a second indication that indicates one or more assisting UEs to transmit the first stage SCI; and
   configure the second indication by configuring a cast type indicator to indicate unicast messaging.
10. The UE of statement 1, wherein the first stage SCI further indicates one or more reserved resources and one or more scheduling parameters, and the processing circuitry is further configured to:
   receive an updated one or more scheduling parameters for the one or more reserved resources.
11. A user equipment (UE), comprising:
   a memory interface; and
   processing circuitry communicatively coupled to the memory interface and
   configured to:
      receive a physical sidelink control channel (PSCCH) message comprising a first stage sidelink control information (SCI); and
      identify, in the first stage SCI, a first indication related to a SCI assistance request, and
      in response to the PSCCH message, cause transmission of the first stage SCI to one or more other UEs.
12. The UE of statement 10, wherein the first stage SCI indicates one or more reserved resources including one or more scheduling parameters, the processing circuitry further configured to:
   perform channel interference measurements;
   determine an updated one or more scheduling parameters that are different from the one or more scheduling parameters, according to the channel interference measurements; and
   generate a message comprising the updated one or more scheduling parameters.
13. The UE of statement 10, further configured to receive a physical sidelink shared channel (PSSCH) message comprising a second stage SCI wherein the second stage SCI includes a second indication indicating one or more assisting UEs to transmit the first stage SCI.
14. The UE of statement 10, further configured to:
   identify a PSCCH based format 1-A configuration comprised in the first stage SCI; and
   cause transmission of the first stage SCI according to the PSCCH based format 1-A configuration.
15. The UE of statement 10, further configured to:
   receive a second stage SCI; and
   cause transmission of the second stage SCI according to the first indication
   wherein transmission of the first stage SCI and second stage SCI indicates the SCI assistance request identified in the first indication.
16. The UE of statement 10, further configured to:
   receive a physical sidelink shared channel (PSSCH) message comprising a second stage SCI;
   identify second indication, in the second stage SCI, comprising a communication range threshold, wherein the communication range threshold is related to a channel quality between the UE and a Tx UE;
   perform communication range measurements;
   based on the communication range measurements, determine that the UE satisfies the communication range threshold; and
   cause transmission of the first stage SCI to one or more other UEs in response to satisfying the communication range threshold.
17. The UE of statement 11, further configured to:
   identify a SCI format 1-A comprised in the first stage SCI; and
   wherein the first indication is identified by a one or more reserved bits of the SCI format 1-A that are of a non-zero value.
18. The UE of statement 11, further configured to:
   identify one or more reserved resources comprised in the first stage SCI; and
   transmit the first stage SCI according to the one or more reserved resources.
19. A baseband processor configured to:
   generate a first stage sidelink control information (SCI), wherein the first stage SCI includes a first indication related to a SCI assistance request, wherein the first indication instructs a UE to transmit the first stage SCI.
20. The baseband processor of claim 19, wherein the first indication is configured by a reserved value in the first stage SCI.
21.A method as substantially described herein with reference to each or any combination of the Figures included herein or with reference to each or any combination of paragraphs in the Detailed Description.
22.A wireless device configured to perform any action or combination of actions as substantially described herein in the Detailed Description as included in the wireless device.
23. A non-volatile computer-readable medium that stores instructions that, when executed, cause the performance of any action or combination of actions as substantially described herein in the Detailed Description.
24. An integrated circuit configured to perform any action or combination of actions as substantially described herein in the Detailed Description.

## Claims

1. A baseband processor of a user equipment (UE), comprising:
a memory interface; and
processing circuitry communicatively coupled to the memory interface and
configured to:
generate a physical sidelink control channel (PSCCH) message related to a first stage sidelink control information (SCI), wherein the first stage SCI includes a first indication related to a SCI assistance request; and
cause transmission of the first stage SCI.

2. The baseband processor of claim 1, wherein the processing circuitry is further configured to configure the first indication by mapping a modulation and coding scheme (MCS) in the first stage SCI to one of a reserved row of a MCS table, one or more reserved bits of a sidelink table, or one or more unused code points.

3. The baseband processor of claim 1 or 2, wherein the first stage SCI is configured according to a SCI format 1-A, and the first indication is configured by setting a one or more reserved bits of the SCI format 1-A to a non-zero value.

4. The baseband processor of any preceding claim, wherein the first stage SCI includes a bit-field associated with a format of a second stage SCI and the first indication is configured by setting the bit-field to a reserved value.

5. The baseband processor of any preceding claim , wherein the first stage SCI indicates one or more reserved resources that indicates to one or more assisting UEs to transmit the first stage SCI according to the one or more reserved resources.

6. The baseband processor of any preceding claim, wherein the first stage SCI indicates a format 2-B for a second stage SCI, the processing circuitry further configured to:
generate a physical sidelink shared channel (PSSCH) message comprising the second stage SCI, wherein the second stage SCI includes a second indication that indicates one or more assisting UEs to transmit the first stage SCI.

7. The baseband processor of claim 6, further configured to:
configure the second indication based on a communication range threshold, wherein
the communication range threshold is based on a channel quality between a receiving (Rx) UE and the UE; and
wherein the second indication indicates either:
that the Rx UE is to transmit the first stage SCI when the Rx UE has a communication range less than or equal to the communication range threshold, or
that the Rx UE is to transmit the first stage SCI when the Rx UE has a communication range greater than the communication range threshold.

8. The baseband processor of any of claims 1 to 5, wherein the first stage SCI further indicates a second stage SCI format according to a format 2-A, the processing circuitry further configured to:
generate a physical sidelink shared channel (PSSCH) message comprising a second stage SCI configured with the second stage SCI format, wherein the second stage SCI includes a second indication that indicates one or more assisting UEs to transmit the first stage SCI; and
configure the second indication by configuring a cast type indicator to indicate unicast messaging.

9. The baseband processor of any preceding claim1, wherein the first stage SCI further indicates one or more reserved resources and one or more scheduling parameters, and the processing circuitry is further configured to:
receive an updated one or more scheduling parameters for the one or more reserved resources.

10. A baseband processor of a user equipment (UE), comprising:
a memory interface; and
processing circuitry communicatively coupled to the memory interface and
configured to:
*receive* a physical sidelink control channel (PSCCH) message comprising a first stage sidelink control information (SCI); and
identify, in the first stage SCI, a first indication related to a SCI assistance request, and
in response to the PSCCH message, cause transmission of the first stage SCI to one or more other UEs.

11. The baseband processor of claim 10, wherein the first stage SCI indicates one or more reserved resources including one or more scheduling parameters, the processing circuitry further configured to:
perform channel interference measurements;
determine an updated one or more scheduling parameters that are different from the one or more scheduling parameters, according to the channel interference measurements; and
generate a message comprising the updated one or more scheduling parameters.

12. The baseband processor of claim 10 or 11, further configured to receive a physical sidelink shared channel (PSSCH) message comprising a second stage SCI wherein the second stage SCI includes a second indication indicating one or more assisting UEs to transmit the first stage SCI.

13. The baseband processor of claim 10, 11 or 12, further configured to:
identify a PSCCH based format 1-A configuration comprised in the first stage SCI; and
cause transmission of the first stage SCI according to the PSCCH based format 1-A configuration.

14. The baseband processor of any of claims 10 to 13, further configured to:
receive a second stage SCI; and
cause transmission of the second stage SCI according to the first indication
wherein transmission of the first stage SCI and second stage SCI indicates the SCI assistance request identified in the first indication.

15. The baseband processor of any of claims 10 to 13, further configured to:
receive a physical sidelink shared channel (PSSCH) message comprising a second stage SCI;
identify second indication, in the second stage SCI, comprising a communication range threshold, wherein the communication range threshold is related to a channel quality between the UE and a Tx UE;
perform communication range measurements;
based on the communication range measurements, determine that the UE satisfies the communication range threshold; and
cause transmission of the first stage SCI to one or more other UEs in response to satisfying the communication range threshold.
